# EUROPEAN PATENT SPECIFICATION

(11) **EP 2 687 466 B1**
(45) Date of publication and mention of the grant of the patent: **13.01.2016**
(21) Application number: 13176277.5
(22) Date of filing: 12.07.2013
(51) Int. Cl.: B65G 23/44

(54) **Conveyor belt tightening device**
Förderband-Festziehvorrichtung
Dispositif de serrage de courroie transporteuse

(30) Priority: 19.07.2012 DK 201270443
(43) Date of publication of application: 22.01.2014
(73) Proprietor: Ammeraal Beltech Modular A/S, 7100 Vejle (DK)
(72) Inventor: Westergaard Andersen, Kenneth, 7120 Vejle Øst (DK)
(74) Representative: Tellefsen, Jens J.

(56) References cited:
- GB-A- 1 057 751
- US-A- 2 438 068
- US-A- 3 753 488
- US-A1- 2010 213 036

## Description

### Field of the Invention

The present invention relates to a conveyor belt tightening device as well as a conveyor incorporating such a tightening device, according to the preamble of claim 1.

### Background of the Invention

In the art of endless conveyors there is a need to keep the conveying surface relatively plane, i.e. without buckling, twisting etc. One of the main features in accomplishing this is a conveyor belt tightening device which tries to take up the slack inherent in a belt such that a number of objects are achieved. One of these objects is to create a smoothly running and relatively flat conveying surface in the transport direction. A further object is to make sure that the engagement between the sprocket wheels which provide the propulsion power for the endless conveyor is optimal to the largest extent possible during the entire life expectancy of the conveyor.

When using endless conveyors built up from a large number of substantially identical injection moulded plastic links, the relative movement between the links will over time cause some wear whereby the conveyor belt will be a little more slack than when it was installed. In order to take up this slack the conveyor belt tightening device will typically have a possibility of being adjusted.

Traditionally the conveyor belt tightening device is a system of four pulleys arranged substantially in a configuration where the axles of the pulleys in a cross-sectional view are arranged in a trapeze, i.e. one axle in each corner of the trapeze. By providing adjustment possibilities between the pulleys it is possible to take up the slack and at the same time by arranging the axle on which the sprocket wheels are arranged inside the trapeze the conveyor belt is guided past the sprocket wheels thereby safeguarding a good contact between the belt and the sprocket wheels such that the propulsion power of the sprockets may be transferred to the conveyor belt.

Depending on the application and the width of the conveyor belt any number of sprocket wheels may be arranged on one or more axles along the conveyor belt.

Document US-A-3 753 488 discloses a conveyor belt tightening device as stated in the preamble of claim 1.

### Object of the Invention

One big disadvantage of a construction as described above is the fact that the pulleys create a substantial amount of friction when the conveyor belt has to be turned through 90° or more in order to run through the conveyor belt tightening device. Consequently, there is a need to provide a construction which minimizes the friction through the conveyor belt tightening device.

### Description of the Invention

The invention addresses this by providing a conveyor belt tightening device for use in a conveying device where said conveying device is of the type having a conveyor belt arranged for rotation between two or more pulleys, where said pulleys are arranged in a conveying structure, whereby the endless conveyor belt has an upper transport path and a lower return path, where said device comprises means for in use attaching said tightening device to the conveyor structure, in or superposed the belt return path, where said tightening device comprises first and second secondary pulleys, and an arched member arranged between said pulleys, where the pulleys in use guide the conveyor belt across a belt guide surface provided in the arched member.

The arched member arranged between two secondary pulleys and out of an imaginary plane defined by the axles of the two secondary pulleys provides the tightening possibilities and at the same time minimizes friction in that it eliminates the two other pulleys and at the same time provides a smooth transition between the two remaining second secondary pulleys. The arched shape provides a much smoother transition such that each individual belt link does not have to be rotated as much relative to adjacent belt links thereby minimizing the energy needed to overcome the friction between neighbouring belt links. Therefore, in addition to lowering the energy necessary to propel the entire conveyor belt, also tear and wear on the individual belt links is minimized dramatically.

In a further advantageous embodiment of the invention the arched member may be displaced relative to at least one of the secondary pulleys. With this construction it becomes very easy to control the arched member in that it may be hinged in one side, whereas on the other side it may be urged against the conveyor belt in use, i.e. for example by installing a spring member or the like and simply tilting the arched member relative to the secondary pulleys. The wear and tear in the conveyor belt usually is relatively slow and therefore by having this very simple manner of adjusting the tension in the belt taking up the slack it does provide adequate and sufficient tightening for long periods of time between service is needed on the belt construction as such.

In a still further advantageous embodiment of the invention the secondary pulleys and the arched member are arranged on a common frame, and where means are provided for displacing the arched member relative to said frame. With this construction the inventive conveyor belt tightening device may be used as a stand-alone unit which can be retrofitted to existing conveyors in that due to its own frame construction it is more or less independent of the already existing conveyor structure as such. Naturally it will be necessary to safeguard that the secondary pulleys and the arched member are arranged correctly in the return path of the conveyor.

In a still further advantageous embodiment of the invention the guide surface is provided with rollers, where a salient portion of the rollers extends above the guide surface, and where the rollers are arranged for rotation about axes arranged perpendicular to the intended travelling direction of the conveyor belt. As the rollers have a salient portion extending above the guide surface, the conveyor belt will come into contact with the rollers such that the friction between the arched portion and the conveyor belt is further reduced. This will of course reduce the overall power consumption of the conveyor structure and at the same time dramatically reduce the wear on the conveyor belt.

In a still further advantageous embodiment of the invention the guide surface is manufactured from a low-friction and high-wear material selected among any of the following: Delarin®, Kevlar®, stainless steel or the like. With these materials the best of two worlds is achieved, namely low friction for the benefit of energy consumption and wear on the belt in combination with high wear capabilities such that the life expectancy of the conveyor belt tightening device is very long.

In a further advantageous embodiment of the invention the guide surface itself is an endless belt, where the elevation of the belt relative to the pulleys is adjustable. This embodiment has a number of advantages, first of all it naturally reduces the friction as the conveyor belt tightening device engages the conveyor belt in that the endless belt of the tightening device will be operated at the same speed as the conveyor belt itself. Furthermore, by selecting a conveyor belt for the tightening device having a high friction surface it is possible to impart propulsion to the conveyor belt at the same time as it is being tightening. By transferring power from a secondary or mini conveyor belt to the conveyor belt pressure and impact are taken off the sprocket wheels teeth which typically transfer the power by the teeth on the sprocket wheels on connection pins or eye parts, i.e. very concentrated points on the conveyor structure, whereas the belt transfer has a much larger surface of impact and as such will have much less wear and tear on the main conveyor belt.

In a still further advantageous embodiment of the invention the guide surface is provided with one or more slits. These slits will typically have a size and dimension such that the sprocket wheels or at least the teeth of the sprocket wheels will be able to project through the slits for engagement with the conveyor belt. In this manner it is facilitated that as the conveyor belt passes over the guide surface where it is in its most tight configuration the sprocket wheels will have a safe and sure engagement and thereby transfer power to the conveyor belt itself. The number of slits should naturally correspond to the number of sprocket wheels arranged on the axle which again depends on how much power is to be transferred to the belt and the width of the belt etc.

The invention is also directed at a conveyor comprising an endless conveyor belt and a belt tightening device as described above. Naturally, a conveyor structure incorporating a conveyor belt tightening device as described above will enjoy all the benefits and advantages as already discussed above.

### Description of the Drawing

The invention will now be explained with reference to the accompanying drawings in which
- Figure 1: illustrates schematically a traditional conveyor construction
- Figure 2: illustrates
- Figure 3: illustrates an embodiment of the invention where only the arched member 20 is illustrated
- Figure 4: illustrates a conveyor structure incorporating an arched member 20 as illustrated in figure 3
- Figure 5: illustrates an alternative to the arched member
- Figure 6: illustrates another way of reducing the friction in a conveyor belt tightening device according to the present invention
- Figure 7: illustrates a section of the guide surface 21 around a roller 40
- Figure 8: illustrates the conveyor tightening device as a separate member having its own frame 50

### Detailed Description of the Invention

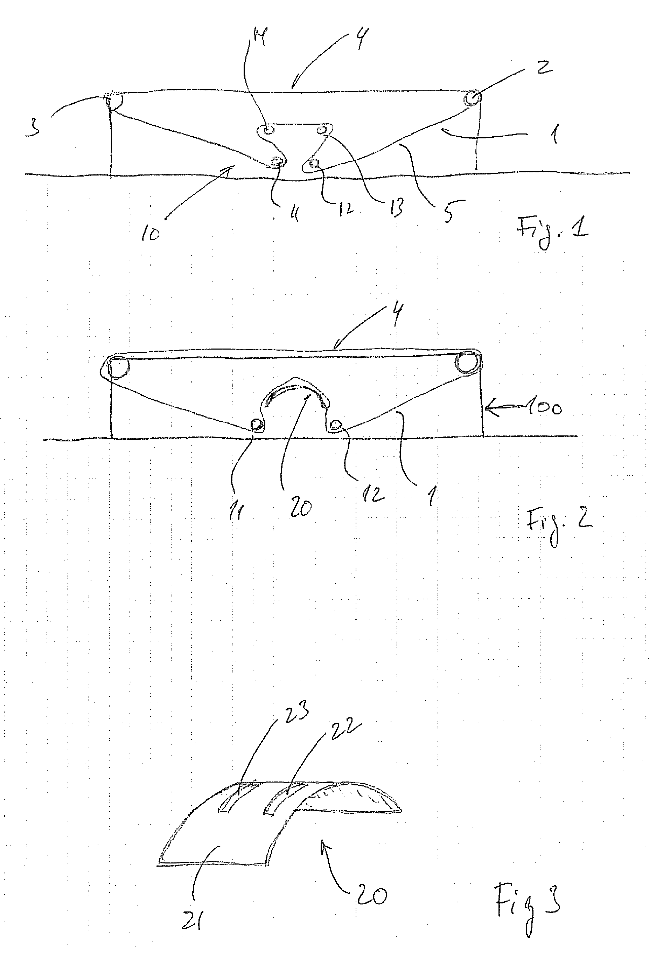

In figure 1 is schematically illustrated a traditional conveyor construction. The conveyor belt 1 is arranged for rotation around two pulleys 2, 3 such that between the pulleys 2, 3 a substantially plane transport surface 4 is provided. Items placed on the transport surface 4 will be transported along the conveyor from one pulley to the other. In this context it should be noted that in order to describe and illustrate the invention the conveyor structures have been greatly simplified and also the general conveyor structure is not illustrated.

Somewhere along the path of the conveyor belt is arranged a conveyor tightening device 10 which typically comprises four secondary pulleys 11, 12, 13, 14. The conveyor belt 1 is wound around the secondary pulleys 11, 12, 13, 14 such that by displacing the pulleys relative to each other, for example elevating the pulleys 13, 14 relative to the pulleys 11, 12 the conveyor belt 1 is tightened, thereby providing a substantially flat and stable transport surface 4.

Generally, the upper path of the conveyor belt's travel will be referred to as the upper transport path 4 and the lower path of the conveyor belt will be referred to as the lower return path 5.

As the conveyor belt 1 is wound around the secondary pulleys 11, 12, 13, 14 the conveyor belt 1 will have to bend, typically through more than 90° such that internal friction in the conveyor belt gives rise to extra energy consumption and to tear and wear in the belt as such. Also contact with the pulleys, give rise to friction. Although the conveyor belt has been optimized for this use and such a construction, over the years there is still a substantial friction built into the system.

With the present invention as illustrated with reference to figure 2 the upper pulleys 13, 14 are replaced by an arched member 20 arranged in or superposed the belt return path 5 such that as the conveyor belt 1 is wound around the secondary pulleys 11, 12 they will be guided across the arched member 20 along a guiding surface. In this manner the conveyor belt 1 does not have to be bent or turned to the same degree as prior art devices, and thereby create the friction which was hitherto created by the pulleys 13, 14, but will have a smooth transition along the arched member 20 between the secondary pulleys 11, 12.

The arched member 20 may be displaced relative to the secondary pulleys or at least to one of them such that the conveyor belt's path or the distance of the conveyor belt's 1 path may be altered. This may be carried out by any suitable means, but traditionally the arched member 20 will be mounted in the conveyor structure's frame 100 in such a manner that it is possible to either mechanically or by using springs or actuating members to alter the distance between the secondary pulleys 11, 12 and the arched member 20 and in this manner keep the conveyor belt 1 properly tightened thereby creating a smooth reliable and stable transport path 4 in the conveyor structure.

The arched member may be given any suitable curvature. Furthermore, the guide surface may be provided with means for lowering the friction such as for example the guide surface may be covered by a low friction material such as Delarin®, Kevlar® or the like which in addition has very good wear characteristics indicating a long service life.

In figure 3 is illustrated an embodiment of the invention where only the arched member 20 is illustrated. The guide surface 21 is in this embodiment provided with two slits 22, 23. The slits 22, 23 are arranged such that a sprocket wheel (not illustrated) may be arranged superposed the slits 22, 23 in a manner such that at least a section of the teeth provided on sprocket wheels projects above the guide surface 21. In this manner it is ensured that as the conveyor belt in a tight and controlled manner passes the guide surface 21 the engagement between the teeth of the sprocket wheels and the conveyor belt is substantially perfect. In this embodiment two slits 22, 23 are illustrated, but naturally one, two or any number of slits depending on the application and the width of the conveyor belt may be arranged in the arched member 20.

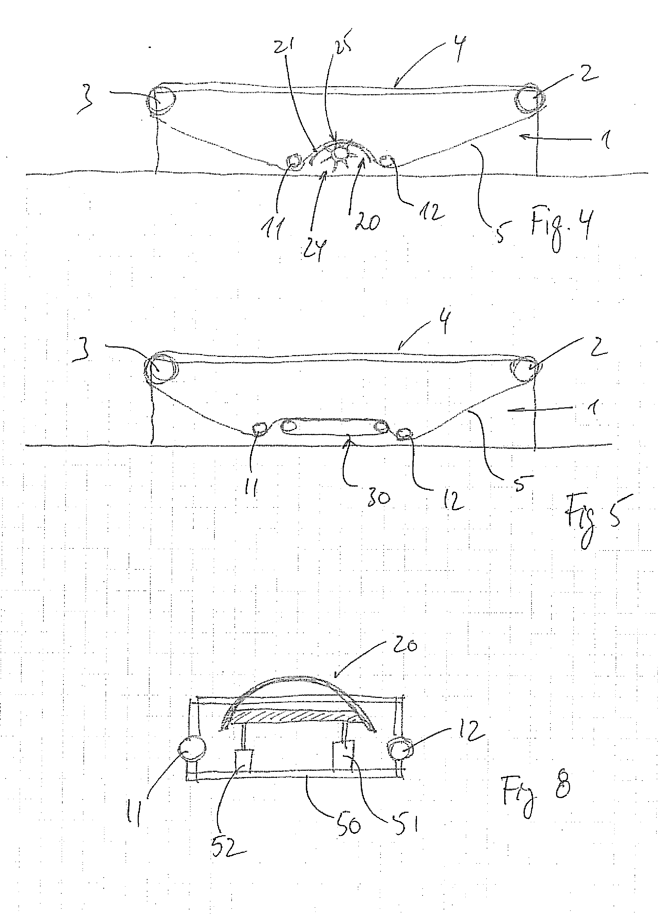

Turning to figure 4 a conveyor structure incorporating an arched member 20 as illustrated in figure 3 is incorporated in or superposed the return path 5 of the conveyor belt 1. A sprocket wheel 24 is schematically illustrated where the teeth 25 of the sprocket wheel project through the guide surface 21 of the arched member 20 for engagement with the conveyor belt 1 in the return path 5. The secondary pulleys 11, 12 ensure that the conveyor belt is maintained in close contact with the guide surface 21 across the arched member 20.

In figure 5 is illustrated an alternative to the arched member where the conveyor tightening device is created by arranging a "mini-conveyor belt" 30 in or superposed the conveyor belt's 1 return path 5 between the secondary pulleys 11, 12. It is foreseen that the mini-conveyor belt 30 may be provided with its own drive pulleys such that it will actively assist or even create the entire propulsion force needed to propel the conveyor belt which is normally carried out by the sprocket wheels as discussed above. By urging the mini-conveyor 30 against the return path 5 of the conveyor belt 1 between the secondary pulleys 11, 12 a conveyor belt tightening effect is achieved with a minimum of friction.

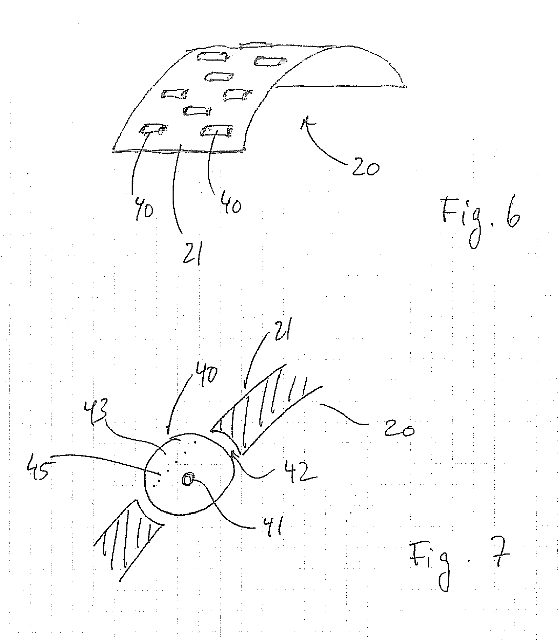

Another way of reducing the friction in a conveyor belt tightening device according to the present invention is illustrated with reference to figure 6. Here the arched member 20 is provided with rollers 40 arranged in the guide surface 21 of the arched member 20. The rollers 40 are arranged such that they will rotate around axles perpendicular to the transport direction of the conveyor belt, and that at least the salient portion of the rollers 40 extends above the guide surface 21 as illustrated with reference to figure 7.

In figure 7 a section of the guide surface 21 around a roller 40 is illustrated. In the illustrated example an aperture 42 is provided in the arched member 20 in order to fit the roller 40. However, the roller may also be positioned in a cavity such that the arched member has an unbroken underside and only the salient portion 43 extends above the guide surface 21. The roller 40 is arranged for rotation around an axle 41 arranged in the arched member 20. A dashed line 45 indicates the level of the guide surface such that it is clear that a salient portion 43 of the roller 40 extends above the guide surface 21 for engagement with a conveyor belt (not illustrated). By arranging a number of rollers for example as illustrated with reference to figure 6 having salient portions 43 projecting above the guide surface 21 substantially no friction between a conveyor belt travelling across the belt tightening device arises between the belt tightening device and the conveyor belt.

Turning to figure 8 the conveyor tightening device is illustrated as a separate member having its own frame 50. The secondary pulleys 11, 12 are arranged for rotation on the frame 50 and furthermore the arched member 20 arranged between the secondary pulleys 11, 12 is connected to actuators 51, 52 such that the conveyor belt arranged for rotation around the secondary pulleys 11, 12 and across the guide surface on the arched member 20 may be tightened by adjusting the extension on the actuators 51, 52.

A system as illustrated in figure 8 may be arranged or retrofitted to already existing conveyor structures and may be provided with any or all of the inventive features as discussed above.

Above, the invention has been explained with reference to specific embodiments, but the scope of protection shall not be limited to these, but only be limited by the appended claims.

## Claims

1. Conveyor belt tightening device (10) for use in a conveying device where said conveying device is of the type having an endless conveyor belt (1) arranged for rotation between two or more pulleys (2, 3) , where said pulleys are arranged in a conveying structure (100), whereby the endless conveyor belt has an upper transport path (4) and a lower return path (5), where said device comprises means for in use attaching said tightening device to the conveyor structure, in or superposed the belt return path, where said tightening device comprises first and second secondary pulleys (11, 12), **characterized in that** it comprises an arched member (20) arranged between said secondary pulleys, where the secondary pulleys in use guide the conveyor belt across a belt guide surface (21) provided in the arched member.

2. Conveyor belt tightening device according to claim 1, where the arched member is displaced relative to at least one of the secondary pulleys.

3. Conveyor belt tightening device according to claim 1, wherein the secondary pulleys and the arched member are arranged on a common frame (50) , and where means (51, 52) are provided for displacing the arched member relative to said frame.

4. Conveyor belt tightening device according to claim 1, wherein the guide surface is provided with a plurality of rollers (40), where a salient portion (43) of each roller extends above the guide surface, and where the rollers are arranged for rotation about axes (41) arranged perpendicular to the intended travelling direction of the conveyor belt.

5. Conveyor belt tightening device according to claim 1, wherein the guide surface is manufactured from a low friction and high wear material selected among any of the following: Delarin®, Kevlar®, stainless steel or the like.

6. Conveyor belt tightening device according to claim 1, wherein the guide surface is itself an endless belt (30), where the elevation of the belt relative to the pulleys is adjustable.

7. Conveyor belt tightening device according to claim 1, wherein the guide surface is provided with one or more slits (22, 23).

8. Conveyor, comprising an endless conveyor belt (1) arranged for rotation about at least two pulleys (2, 3), the endless conveyor belt thereby having an upper transport path (4) and a lower return path (5), and where a conveyor belt tightening device (10) is arranged in or superposed the belt return path, where said device comprises first and second pulleys (11, 12), **characterized in that** it comprises an arched member (20) arranged between said secondary pulleys, where the secondary pulleys in use guide the conveyor belt across a belt guide surface (21) provided in the arched member.

9. Conveyor according to claim 8 wherein the conveyor belt is assembled from substantially identical modular plastic belt links.

## Patentansprüche

1. Förderband-Festziehvorrichtung (10) zur Verwendung in einer Fördervorrichtung, wobei die Fördervorrichtung eine Fördervorrichtung des Typs mit einem endlosen Förderband (1) ist, das zur Drehung zwischen zwei oder mehr Umlenkrollen (2, 3) angeordnet ist, wobei die Umlenkrollen in einer Förderstruktur (100) angeordnet sind, wobei das endlose Förderband einen oberen Transportweg (4) und einen unteren Rückkehrweg (5) aufweist, wobei die Vorrichtung Mittel umfasst, um im Betrieb die Festziehvorrichtung an der Förderstruktur im Bandrückkehrweg oder diesen überlagernd anzubringen, wobei die Festziehvorrichtung eine erste und eine zweite sekundäre Umlenkrolle (11, 12) umfasst, **dadurch gekennzeichnet, dass** sie ein bogenförmiges Element (20) umfasst, das zwischen den sekundären Umlenkrollen angeordnet ist, wobei die sekundären Umlenkrollen im Betrieb das Förderband über eine Bandführungsoberfläche (21) führen, die in dem bogenförmigen Element vorgesehen ist.

2. Förderband-Festziehvorrichtung nach Anspruch 1, wobei das bogenförmige Element in Bezug auf mindestens eine der sekundären Umlenkrollen verschoben ist.

3. Förderband-Festziehvorrichtung nach Anspruch 1, wobei die sekundären Umlenkrollen und das bogenförmige Element auf einem gemeinsamen Rahmen (50) angeordnet sind, und wobei Mittel (51, 52) zum Verschieben des bogenförmigen Elements in Bezug auf den Rahmen vorgesehen sind.

4. Förderband-Festziehvorrichtung nach Anspruch 1, wobei die Führungsoberfläche mit einer Vielzahl von Laufrollen (40) versehen ist, wobei ein vorspringender Abschnitt (43) jeder Laufrolle sich oberhalb der Führungsoberfläche erstreckt, und wobei die Laufrollen zur Drehung um Achsen (41) angeordnet sind, die senkrecht zur beabsichtigten Laufrichtung des Förderbands angeordnet sind.

5. Förderband-Festziehvorrichtung nach Anspruch 1, wobei die Führungsoberfläche aus einem reibungsarmen und verschleißbeständigen Material hergestellt ist, das unter einem der Folgenden ausgewählt wird: Delarin®, Kevlar®, Edelstahl oder dergleichen.

6. Förderband-Festziehvorrichtung nach Anspruch 1, wobei die Führungsoberfläche selbst ein endloses Band (30) ist, wobei die Erhebung des Bandes in Bezug auf die Umlenkrollen einstellbar ist.

7. Förderband-Festziehvorrichtung nach Anspruch 1, wobei die Führungsoberfläche mit einem oder mehreren Schlitzen (22, 23) versehen ist.

8. Förderband, das ein endloses Förderband (1) umfasst, das zur Drehung um mindestens zwei Umlenkrollen (2, 3) angeordnet ist, wobei das endlose Förderband dabei einen oberen Transportweg (4) und einen unteren Rückkehrweg (5) aufweist, und wobei eine Förderband-Festziehvorrichtung (10) im Bandrückkehrweg oder diesem übergelagert angeordnet ist, wobei die Vorrichtung eine erste und eine zweite Umlenkrolle (11, 12) umfasst, **dadurch gekennzeichnet, dass** sie ein bogenförmiges Element (20) umfasst, das zwischen den sekundären Umlenkrollen angeordnet ist, wobei die sekundären Umlenkrollen im Betrieb das Förderband über eine Bandführungsoberfläche (21) führen, die in dem bogenförmigen Element vorgesehen ist.

9. Förderband nach Anspruch 8, wobei das Förderband aus im Wesentlichen identischen bausteinartigen Kunststoffbandgliedern zusammengesetzt ist.

## Revendications

1. Dispositif de serrage de courroie transporteuse (10) pour une utilisation dans un dispositif de serrage où ledit dispositif de serrage est du type ayant une courroie transporteuse sans fin (1) agencée pour une rotation entre deux poulies (2, 3) ou plus,
où lesdites poulies sont agencées dans une structure de transport (100),
moyennant quoi la courroie transporteuse sans fin a un chemin de transport supérieur (4) et un chemin de retour inférieur (5),
où ledit dispositif comprend des moyens pour, en pratique, fixer ledit dispositif de serrage à la structure transporteuse, dans le ou superposé au chemin de retour de courroie, où ledit dispositif de serrage comprend des première et seconde poulies secondaires (11, 12), **caractérisé en ce qu'**il comprend un élément arqué (20) agencé entre lesdites poulies secondaires, où les poulies secondaires, en pratique, guident la courroie transporteuse sur une surface de guidage de courroie (21) prévue dans l'élément arqué.

2. Dispositif de serrage de courroie transporteuse selon la revendication 1, où l'élément arqué est déplacé par rapport à au moins une des poulies secondaires.

3. Dispositif de serrage de courroie transporteuse selon la revendication 1, dans lequel les poulies secondaires et l'élément arqué sont agencés sur un cadre commun (50), et où des moyens (51, 52) sont prévus pour le déplacement de l'élément arqué par rapport audit cadre.

4. Dispositif de serrage de courroie transporteuse selon la revendication 1, dans lequel la surface de guidage est pourvue d'une pluralité de rouleaux (40), où une partie saillante (43) de chaque rouleau s'étend au-dessus de la surface de guidage, et où les rouleaux sont agencés pour une rotation sur des axes (41) agencés perpendiculaires à la direction de trajectoire prévue de la courroie transporteuse.

5. Dispositif de serrage de courroie transporteuse selon la revendication 1, dans lequel la surface de guidage est fabriquée à partir d'un matériau à faible friction et à usure élevée sélectionné parmi l'un des suivants : Delarin®, Kevlar®, acier inoxydable ou similaire.

6. Dispositif de serrage de courroie transporteuse selon la revendication 1, dans lequel la surface de guidage est elle-même une courroie sans fin (30),
où l'élévation de la courroie par rapport aux poulies est ajustable.

7. Dispositif de serrage de courroie transporteuse selon la revendication 1, dans lequel la surface de guidage est pourvue d'une ou de plusieurs fentes (22, 23).

8. Transporteur, comprenant une courroie transporteuse sans fin (1) agencée pour une rotation sur au moins deux poulies (2, 3), la courroie transporteuse sans fin ayant ainsi un chemin de transport supérieur (4) et un chemin de retour inférieur (5),
et où un dispositif de serrage de courroie transporteuse (10) est agencé dans le ou superposé au chemin de retour de courroie, où ledit dispositif comprend des première et seconde poulies (11, 12), **caractérisé en ce qu'**il comprend un élément arqué (20) agencé entre lesdites poulies secondaires, où les poulies secondaires, en pratique, guident la courroie transporteuse sur une surface de guidage de courroie (21) prévue dans l'élément arqué.

9. Transporteur selon la revendication 8 dans lequel la courroie transporteuse est assemblée à partir de liaisons de courroie en plastique modulaires substantiellement identiques.
